# FASCICULE DE BREVET EUROPEEN

(11) **EP 1 276 808 B1**
(45) Date de publication et mention de la délivrance du brevet: **31.08.2005**
(21) Numéro de dépôt: 01929702.7
(22) Date de dépôt: 25.04.2001
(51) Int. Cl.: C08K 9/08

(54) **BIOMATERIAU A BASE DE POLYMERE HYDROPHILE PRESENTANT UN SIGNAL SPECIFIQUE EN IMAGERIE PAR RESONANCE MAGNETIQUE ET PROCEDE DE PREPARATION D'UN TEL BIOMATERIAU**
BIOMATERIAL AUF BASIS EINES HYDROPHILEN POLYMERS MIT EINEM BESONDEREN SIGNAL BEI DER MAGNETISCHEN RESONANZ UND VERFAHREN ZU DESSEN HERSTELLUNG
BIOMATERIAL BASED ON HYDROPHILIC POLYMER EXHIBITING A SPECIFIC SIGNAL IN MAGNETIC RESONANCE IMAGING AND METHOD FOR PREPARING SAME

(30) Priorité: 25.04.2000 FR 0005400
(43) Date de publication de la demande: 22.01.2003
(73) Titulaire: L'ASSISTANCE PUBLIQUE - HOPITAUX DE PARIS, 75001 Paris (FR)
(72) Inventeur: LAURENT, Alexandre, F-92400 Courbevoie (FR); LABARRE, Denis, F-91140 Villebon (FR)
(74) Mandataire: Breese, Pierre
(86) Numéro de dépôt international: PCT/FR2001/001267
(87) Numéro de publication internationale: WO 2001/081460

(56) Documents cités:
- WO-A-95/05669
- WO-A-99/19000
- US-A- 5 492 814

## Description

La présente invention se rapporte au domaine des biomatériaux détectables en imagerie par résonance magnétique.

La présente invention se rapporte plus particulièrement à un biomatériau chargé de particules d'oxyde de fer superparamagnétiques de façon à présenter un signal différent de celui du biomatériau non chargé et de celui de l'environnement biologique dans lequel il est placé pour un ou plusieurs types de séquences d'IRM, ledit biomatériau étant constitué au moins d'un polymère hydrophile.

Un biomatériau est un matériau toléré par le corps humain qui est susceptible de rentrer dans la composition d'un dispositif médical. Le contact entre le biomatériau et le corps humain peut être temporaire, pour la réalisation de l'image ou des images, ou durable, notamment lors de la réalisation d'implants. Ce contact peut concerner tout ou partie du biomatériau.

L'art antérieur ne connaît pas de biomatériau constitué au moins d'un polymère hydrophile et comportant un marqueur de façon à présenter un signal différent de celui du biomatériau non chargé et de celui de l'environnement biologique dans lequel il est placé. L'art antérieur connaît seulement des dispositifs médicaux comportant un marqueur ainsi que des agents de contraste comportant un marqueur, pour l'imagerie par résonance magnétique.

L'art antérieur connaît, par exemple, la demande internationale de brevet numéro WO 94/23782 qui porte sur des dispositifs médicaux tels que des cathéters comprenant des membres non métalliques présentant des particules ioniques paramagnétiques incorporées à l'intérieur. Les particules ioniques paramagnétiques sont enrobées avec un agent enrobant dont le rôle est de retenir de l'eau ou tout liquide donneur de protons autour des particules ioniques, parce que le dispositif médical n'en contient pas.

Les résultats obtenus sont très peu significatifs : seule une légère augmentation, non significative, du signal en spin écho (T1, T2) et en écho de gradient est observée.

L'art antérieur connaît également la préparation de solutions colloïdales de magnétite stabilisées par différents agents. (Massart 1981, IEEE 17, Pouliquen et Chouly 1999 in « Microscpheres microcapsules and liposomes 2 », pour revue).

L'art antérieur connaît également des particules constituées d'un polymère et de nanoparticules d'oxyde de fer formant un agent superparamagnétique pour la préparation d'un produit de contraste injectable, en vue de permettre la signalisation des tumeurs hépatiques par exemple (cf. Fahlvik 1993, JMRI 3 : 187-194 Chambon 1993 Magn Resol Imaging, 11 : 509-519).

Ces produits de contraste ne constituent pas un biomatériau au sens classique du terme et ne permettent pas de réaliser, par eux-mêmes un biomatériau.

La réalisation d'un biomatériau pour l'IRM est difficile et hasardeuse. En effet, si des particules d'oxyde de fer superparamagnétiques sont introduites directement dans le matériau avant polymérisation, leur répartition est inhomogène ; elles forment des agrégats et le signal obtenu (image ou extinction d'image) n'est pas exploitable en raisons de la présence de nombreux artéfacts. Pour obtenir exactement le signal souhaité, il faut être en mesure de maîtriser la répartition dans le biomatériau, c'est-à-dire, la distance moyenne entre chaque grain du marqueur.

La présente invention entend remédier aux inconvénients de l'art antérieur en proposant de complexer lesdites particules d'oxyde de fer superparamagnétiques avec un polymère hydrophile et de les répartir de manière homogène dans le polymère hydrophile du biomatériau afin d'obtenir un biomatériau présentant un signal spécifique, différent de celui du biomatériau non chargé et de celui de l'environnement biologique dans lequel il est placé.

Pour ce faire, la présente invention est du type décrit ci-dessus et elle est remarquable, dans son acception la plus large, en ce que lesdites particules d'oxyde de fer superparamagnétiques sont complexées avec un polymère hydrophile identique ou différent de celui du biomatériau, et en ce que lesdites particules d'oxyde de fer superparamagnétiques complexées avec un polymère hydrophile sont réparties de manière homogène, sans agrégat, dans le polymère hydrophile du biomatériau.

On entend par polymère hydrophile, un polymère naturel ou synthétique ayant une grande affinité pour l'eau, pouvant prendre un grand volume d'eau et devenir un hydrogel. Un polymère hydrosoluble est un polymère hydrophile qui est susceptible de se dissoudre dans une solution aqueuse.

On entend, par ailleurs, par complexation : une interaction sans liaison chimique.

La présente invention est également remarquable en ce que le polymère hydrophile du biomatériau comprend une quantité de particules d'oxyde de fer superparamagnétiques complexées qui est proportionnelle au signal souhaité.

La présente invention est également remarquable en ce que le polymère hydrophile du biomatériau comprend de l'ordre de 10⁻¹ % à 10⁻⁶ % en poids sec de particules d'oxyde de fer superparamagnétiques.

La présente invention est également remarquable en ce que le biomatériau est susceptible de constituer :
- un implant pour l'occlusion vasculaire, pour le comblement de cavités naturelles, pour le comblement de cavités artificielles ou pour le comblement de cavités chirurgicales ; ou
- un biomatériau de reconstruction tissulaire ; ou
- un biomatériau de recouvrement de surfaces corporelles, de cathéters, de sondes, de drains ou de prothèses ; ou
- un marqueur-repère implantable ou non implantable.

La présente invention se rapporte également à un procédé de préparation d'un biomatériau selon l'invention.

Ce procédé est remarquable en ce que l'on mélange dans une solution aqueuse de monomères hydrophiles, des particules d'oxyde de fer superparamagnétiques complexées avec un polymère hydrophile constitué de monomères identiques ou différents des premiers, puis on polymérise l'ensemble de façon à obtenir un hydrogel de polymère dans lequel sont réparties de manière homogène, sans agrégat, les particules d'oxyde de fer superparamagnétiques complexées avec un polymère hydrophile.

Ce procédé est également remarquable en ce que le polymère hydrophile constituant le biomatériau peut être un polymère hydrosoluble et en ce que l'on réticule l'ensemble de façon à obtenir un hydrogel de polymère dans lequel sont réparties de manière homogène, sans agrégat, les particules d'oxyde de fer superparamagnétiques complexées avec un polymère hydrophile.

L'hydrogel ainsi obtenu peut ensuite se présenter sous forme d'un hydrogel à fort ou à faible contenu en eau ou sous la forme d'un biomatériau solide, obtenu après séchage ou lyophilisation et destiné à être utilisé comme tel ou à être réhydraté.

Le biomatériau selon l'invention présente ainsi une extinction de signal significative et homogène dans tout le matériau, dans les séquences classiques d'IRM médical, en Spin écho (T1, T2) et en écho de gradient.

Le biomatériau selon l'invention permet d'avoir le même sens de variation de signal dans les principales séquences d'IRM médical, en Spin écho (T1, T2) et en écho de gradient.

Avantageusement, le procédé selon l'invention permet ainsi de différencier le biomatériau des tissus mous environnants qui ont un signal intermédiaire (gris, lorsqu'ils ne sont pas nécrosés) ou un hyper-signal (lorsqu'ils sont oedèmatisés).

Avantageusement également, le procédé selon l'invention permet de différencier le biomatériau des produits de contraste vasculaire des structures marquées (par exemple Gadolinium), car les tissus très vascularisés, et particulièrement les tumeurs hypervasculaires acquièrent un hypersignal après l'injection.

Avantageusement également, le biomatériau selon l'invention présente un signal en IRM exactement reproductible, en fonction de la concentration en marqueurs formés par les particules d'oxyde de fer superparamagnétiques complexées avec un polymère hydrophile et en fonction de la teneur en eau.

Avantageusement également, le biomatériau selon l'invention présente un marquage stable lorsqu'il est en contact avec un milieu aqueux, le marqueur étant solidement fixé dans le biomatériau qui ne relargue pas.

En conséquence,
- lorsque le biomatériau est constitué d'un polymère non résorbable, le biomatériau marqué selon le procédé conserve avantageusement son marquage de façon durable s'il est implanté dans le corps humain, et
- lorsque le biomatériau est constitué d'un polymère résorbable, le biomatériau marqué selon le procédé conserve avantageusement un marquage qui est proportionnel à sa résorbtion s'il est implanté dans le corps humain, ce qui permet de suivre sa résorbtion.

On comprendra mieux l'invention à l'aide de la description, faite ci-après à titre purement explicatif, d'un mode de réalisation de l'invention, en référence aux figures annexées dans lesquelles :
- la figure 1 illustre un tableau comparatif de réduction du signal obtenu avec un biomatériau selon l'invention ;
- la figure 2 illustre les résultats présentés sur la figure 1 à l'aide d'une courbe comportant en ordonnées le pourcentage de réduction de signal obtenue ; et
- la figure 3 illustre un tableau comparatif montrant qu'il n'existe pas de différence majeures d'intensité de signal entre un gel et un gel fragmenté réalisés par le procédé selon l'invention ; et
- la figure 4 illustre des liquides dans lesquels se trouvent les particules de gel fragmentées, les liquides ne présentant pas de modification de signal, quelle que soit leur concentration en complexe marqueur, après quatre jours.

Le biomatériau selon l'invention est un biomatériau constitué d'au moins un polymère hydrophile et chargé de particules d'oxyde de fer superparamagnétiques de façon à présenter un signal différent de celui du biomatériau non chargé et de celui de l'environnement biologique dans lequel il est placé pour un ou plusieurs types de séquences d'IRM, ledit biomatériau étant constitué au moins d'un polymère hydrophile.

Le biomatériau selon l'invention est caractérisé en ce qu'il se présente sous la forme d'un hydrogel de polymère hydrophile dans lequel sont réparties de manière homogène, sans agrégat, des particules d'oxyde de fer superparamagnétiques complexées avec un polymère hydrophile identique ou différent de celui de l'hydrogel. La partie hydrogel de polymère du biomatériau selon l'invention contient de préférence une quantité de particules d'oxyde de fer superparamagnétiques qui est proportionnelle au signal spécifique souhaité et notamment au signal d'extinction souhaité.

La partie hydrogel de polymère du biomatériau comprend de préférence de l'ordre de 10⁻¹ % à 10⁻⁶ % en poids sec de particules d'oxyde de fer superparamagnétiques.

Le polymère hydrophile de l'hydrogel est de préférence choisi parmi :
- Les polysaccharides sous leurs formes naturelles ou modifiées, sous forme d'amides, d'esters, d'éthers, d'uréthanes, ... ;
- Les protéines sous leurs formes natives ou dénaturées et leurs dérivés, ainsi que les polypeptides et leurs dérivés ;
- les polymères acryliques, tels que les acides polyacryliques et méthacryliques, leurs sels, esters, amides, anhydrides, nitriles et leurs copolymères ;
- les polymères des acides polycarboxyliques tels que les acides fumariques, maléiques, maliques, succiniques, citriques, leurs sels, esters, amides, anhydrides, nitriles et leurs copolymères ;
- le polyéthylène glycol ou le polyoxyéthylène, leurs dérivés et copolymères ;
- la polyéthylènimine, ses dérivés et copolymères ;
- le polystyrène sulfonate et le polystyrène phosphonate, leurs dérivés et copolymères ;
- le polyvinyle sulfonate et le polyvinyle phosphonate, leurs dérivés et copolymères ;
- le polyalcool vinylique, ses dérivés et copolymères ;
- les polyvinyles pyridines, leurs sels, dérivés et copolymères ;
- la polyvinyle pyrrolidone, ses dérivés et copolymères ;
ou un mélange de deux au moins de ceux-ci.

Le polymère complexant les particules d'oxyde de fer superparamagnétiques est choisi de préférence parmi :
- Les polysaccharides sous leurs formes naturelles ou modifiées, sous forme d'amides, d'esters, d'éthers, d'uréthanes, ... ;
- Les protéines sous leurs formes natives ou dénaturées et leurs dérivés, ainsi que les polypeptides et leurs dérivés ;
- les polymères acryliques, tels que les acides polyacryliques et méthacryliques, leurs sels, esters, amides, anhydrides, nitriles et leurs copolymères ;
- les polymères des acides polycarboxyliques tels que les acides fumariques, maléiques, maliques, succiniques, citriques, leurs sels, esters, amides, anhydrides, nitriles et leurs copolymères ;
- le polyéthylène glycol ou le polyoxyéthylène, leurs dérivés et copolymères ;
- la polyéthylènimine, ses dérivés et copolymères ;
- le polystyrène sulfonate et le polystyrène phosphonate, leurs dérivés et copolymères ;
- le polyvinyle sulfonate et le polyvinyle phosphonate, leurs dérivés et copolymères ;
- le polyalcool vinylique, ses dérivés et copolymères ;
- les polyvinyles pyridines, leurs sels, dérivés et copolymères ;
- la polyvinyle pyrrolidone, ses dérivés et copolymères ;
ou un mélange de deux au moins de ceux-ci.

Le biomatériau selon l'invention est ainsi susceptible de constituer :
- un implant pour l'occlusion vasculaire (solutions, suspensions, particules, ...), pour le comblement de cavités naturelles (anatomiques : vaisseaux, uretères, cavité péritonéale, cavité articulaire, os spongieux, ...), pour le comblement de cavités artificielles (prothèses, sondes, ...) ou pour le comblement de cavités chirurgicales (vitrectomie, résection osseuse) ; ou
- un biomatériau de reconstruction tissulaire : sphincters, rides, plasties de tubes ou plans tissulaires, ... ; ou
- un biomatériau de recouvrement de surfaces corporelles (peau saine ou brûlée, conduits aériens, conduits digestifs, ...), de cathéters, de sondes, de drains ou de prothèses (articulaires, vasculaires, ...) ; ou
- un marqueur-repère implantable ou non implantable (repérage stéréotaxique, cathétérisme, ...) ; ou
- tout ou partie d'un dispositif médical implantable ou non en tout ou partie.

Le biomatériau peut se présenter sous la forme :
- d'un bloc hydraté afin de permettre de réaliser un biomatériau en masse prêt à l'implantation, qui peut être découpé de façon extemporanée ; ou
- de particules de gel hydraté afin de permettre de réaliser des particules irrégulières ou des microsphères par émulsion-suspension ; ou
- d'un bloc ou de particules de gel séché ; ou
- d'un film sec ou humide afin de permettre de réaliser un revêtement de dispositif médical implantable ou de biomatériau implantable ; ou
- d'un filament afin de permettre de réaliser des spires d'occlusion ; ou
- de poudres, utilisées telles qu'elles et prenant l'eau des liquides corporels, ou utilisées après incorporation dans un liquide ou un biomatériau chargé d'eau ; ou
- d'une solution visqueuse injectable, plus ou moins visqueuse et pouvant solidifier in situ dans un tissus ou un organe et une solution visqueuse pour trempage et recouvrement ; ou tout autre forme ;

chaque forme pouvant être utilisée telle qu'elle ou associée à un autre biomatériau.

La présente invention se rapporte également à un procédé de préparation d'un biomatériau chargé de particules d'oxyde de fer superparamagnétiques de façon à présenter un signal différent de celui du matériau non chargé et de celui de l'environnement biologique dans lequel il est placé pour un ou plusieurs types de séquences d'IRM, ledit biomatériau étant constitué d'au moins un polymère hydrophile.

Ce procédé est caractérisé en ce que l'on mélange dans une solution aqueuse de monomères hydrophiles, des particules d'oxyde de fer superparamagnétiques complexées avec un polymère hydrophile constitué d'un monomère identique ou différent du premier, puis on polymérise l'ensemble de façon à obtenir un hydrogel de polymère dans lequel sont réparties de manière homogène, sans agrégat, les particules d'oxyde de fer superparamagnétiques complexées avec un polymère hydrophile.

Préalablement, à la complexation, les particules d'oxyde de fer superparamagnétiques sont de préférence stabilisées.

Elles sont ensuite complexées par un polymère hydrophile ou éventuellement par un hydrogel.

La couche de polymère isole chaque particule des autres particules et prévient leur agrégation.

Ceci permet la mise en suspension des particules à différentes concentrations pour leur incorporation à un mélange de monomères hydrophiles avant polymérisation ou à un mélange de polymères hydrosolubles avant réticulation.

L'ajustement de l'épaisseur de la complexation permet de contrôler l'espacement minimal entre les cristaux d'oxyde de fer dans la suspension avant polymérisation ou réticulation, par exemple.

Le polymère hydrophile constituant le biomatériau peut également être un polymère hydrosoluble. On réticule alors l'ensemble formé par ce polymère hydrosoluble et les particules d'oxyde de fer superparamagnétiques complexées de façon à obtenir un hydrogel de polymère dans lequel les particules d'oxyde de fer superparamagnétiques complexées avec un polymère hydrosoluble sont réparties de manière homogène, sans agrégat.

De préférence, le rapport en poids de monomères hydrophiles ou de polymères hydrosolubles, et de particules d'oxyde de fer superparamagnétiques complexées avec un polymère hydrophile ou hydrosoluble est compris entre 10⁻⁶ et 10⁻¹ %.

Le polymère hydrophile constituant le biomatériau peut être choisi, par exemple, parmi :
- Les polysaccharides sous leurs formes naturelles ou modifiées, sous forme d'amides, d'esters, d'éthers, d'uréthanes, ... ;
- Les protéines sous leurs formes natives ou dénaturées et leurs dérivés, ainsi que les polypeptides et leurs dérivés ;
- les polymères acryliques, tels que les acides polyacryliques et méthacryliques, leurs sels, esters, amides, anhydrides, nitriles et leurs copolymères ;
- les polymères des acides polycarboxyliques tels que les acides fumariques, maléiques, maliques, succiniques, citriques, leurs sels, esters, amides, anhydrides, nitriles et leurs copolymères ;
- le polyéthylène glycol ou le polyoxyéthylène, leurs dérivés et copolymères ;
- la polyéthylènimine, ses dérivés et copolymères ;
- le polystyrène sulfonate et le polystyrène phosphonate, leurs dérivés et copolymères ;
- le polyvinyle sulfonate et le polyvinyle phosphonate, leurs dérivés et copolymères ;
- le polyalcool vinylique, ses dérivés et copolymères ;
- les polyvinyles pyridines, leurs sels, dérivés et copolymères ;
- la polyvinyle pyrrolidone, ses dérivés et copolymères ;
ou un mélange de deux au moins de ceux-ci et le polymère hydrophile complexant les particules d'oxyde de fer superparamagnétiques peut être choisi, par exemple, parmi :
- Les polysaccharides sous leurs formes naturelles ou modifiées, sous forme d'amides, d'esters, d'éthers, d'uréthanes, ... ;
- Les protéines sous leurs formes natives ou dénaturées et leurs dérivés, ainsi que les polypeptides et leurs dérivés ;
- les polymères acryliques, tels que les acides polyacryliques et méthacryliques, leurs sels, esters, amides, anhydrides, nitriles et leurs copolymères ;
- les polymères des acides polycarboxyliques tels que les acides fumariques, maléiques, maliques, succiniques, citriques, leurs sels, esters, amides, anhydrides, nitriles et leurs copolymères ;
- le polyéthylène glycol ou le polyoxyde d'éthylène, leurs dérivés et copolymères ;
- la polyéthylènimine, ses dérivés et copolymères ;
- le polystyrène sulfonate et le polystyrène phosphonate, leurs dérivés et copolymères ;
- le polyvinyle sulfonate et le polyvinyle phosphonate, leurs dérivés et copolymères ;
- le polyalcool vinylique, ses dérivés et copolymères ;
- les polyvinyles pyridines, leurs sels, dérivés et copolymères ;
- la polyvinyle pyrrolidone, ses dérivés et copolymères ;
ou un mélange de deux au moins de ceux-ci.

Les deux polymères hydrophiles sont choisis de façon avantageuse :
- identiques ; ou
- de telle sorte qu'ils aient une grande affinité l'un pour l'autre en général ou lorsqu'ils sont placés dans un milieu particulier ; ou
- de telle sorte que le polymère hydrophile constituant le biomatériau ne permet pas de complexer les particules d'oxyde de fer superparamagnétiques mais que l'autre polymère hydrophile puisse assurer cette fonction ; ou
- de telle sorte que le polymère hydrophile complexant les particules d'oxyde de fer superparamagnétiques reste dispersé de façon homogène dans le réticulum du polymère hydrophile constituant le biomatériau lorsque ce dernier polymérise ou précipite ; ou
- de telle sorte que les deux polymères soient tous les deux résorbables ou non.

Lorsque les deux polymères hydrophiles sont différents, le polymère hydrophile complexant les particules d'oxyde de fer superparamagnétiques est de préférence plus hydrophile que le polymère hydrophile constituant le biomatériau, ce dernier pouvant être dispersé dans une solution contenant un solvant non aqueux.

Pour une meilleure compréhension de l'invention, des exemples de mise en oeuvre avec des cristaux de magnétite enrobés de dextrane sont présentés ci-après ; Ces exemples n'empêchent pas l'utilisation d'autres formes complexées d'oxydes magnétiques.

### Exemple 1 (gel bloc)

On mélange dans un tube de verre : 2,5 g de N-acryloyl-tris(hydroxymethyl)methylamine monomère (Polysciences Europe, Eppelheim, Allemagne), 0,2 g de méthylene-bisacrylamide (Polysciences Europe, Eppelheim, Allemagne), 0,05 g de Persulfate d'ammonium + 6ml d'Eau desionisée

Par ailleurs on prépare des solutions diluées dans l'eau (au 1/10ème, 1/100ème, 1/1000ème, 1/10000^{ème}, vol/vol) de dextrane-magnétite (solution commerciale d'Endorem , laboratoires Guerbet, Aulnay, France).

On ajoute au mélange de monomères 5 microlitres de solution de dextrane-magnétite, puis, sous agitation, on ajoute 20 microlitres de Tétraméthyléthylènediamine 99% (Acros, Gel, Belgique).

Après polymérisation, on obtient des gels cohérents homogènes, translucides, légèrement teintés de jaune pour le plus concentré en dextran-magnétite.

Le gel le plus chargé contient 1 micromole de fer pour 8 ml de gel soit 0,125 mumole Fe/ml gel.

Les tubes de gel chargé et plusieurs témoins (gel non chargé, eau, huile , solution de dextrane-magnétite commerciale à la même concentration que celle du gel le plus chargé) sont examinés en IRM (0.2 Tesla) avec trois séquences : T1 (SE 490/18 (90°)), T2 ( SE 2000/80 (120°)), FE 3d (60/20 (20°))

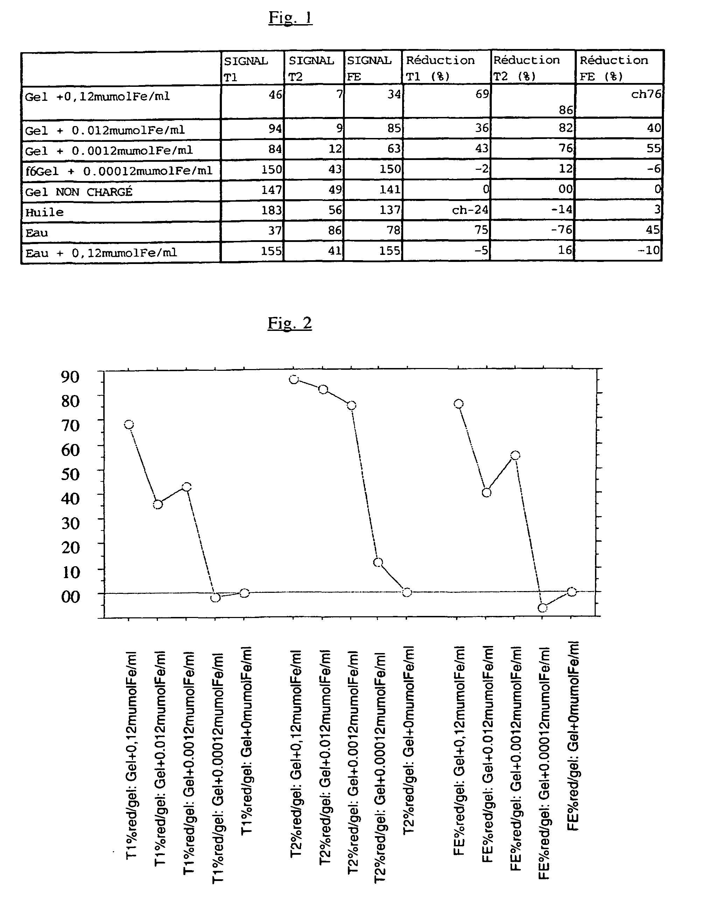

Le gel non chargé est spontanément en hypersignal en IRM par rapport à l'eau, en T1, en T2 et en FE, comme illustré figures 1 et 2.

En T1 le signal du gel chargé décroît de façon inverse avec l'augmentation de la charge de marqueur complexé. Il est très différent du signal de l'huile (hypersignal), et de la solution de marqueur (hypersignal).

En T2 le signal décroît avec l'augmentation de la charge de marqueur complexé. Il est très différent du signal de l'huile (moyen signal), et de la solution de marqueur (hyposignal), de l'eau (hypersignal).

En FE le signal décroît de façon inverse avec l'augmentation de la charge de marqueur complexé. Il est très différent du signal de l'huile (moyen signal), de la solution de marqueur (hyposignal) et de l'eau (hypersignal).

Le gel non chargé est différent des gels chargés à plus du 1/10000^{ème}. Il est peu différent du gel le moins chargé.

Le gel le plus chargé en marqueur et l'eau contenant la même concentration de charge sont très différents en séquences T1 en T2 et en FE.

En résumé, Le gel enrichi en marqueur perd son hypersignal en T1, en T2, et en FE, et ce de manière proportionnelle à la concentration.

Une répartition homogène du marqueur complexé dans le gel est facilement obtenue.

### Exemple 2 : gel fragmenté en suspension

On prépare un hydrogel comme dans l'exemple avec une concentration de charge identique à celle du gel le plus chargé cité dans l'exemple 1. On fragmente le gel en particules qui sont mises en suspension dans le sérum physiologique. On étudie plusieurs jours plus tard le signal des particules en suspension et celui du surnageant selon la technique IRM de l'exemple 1.

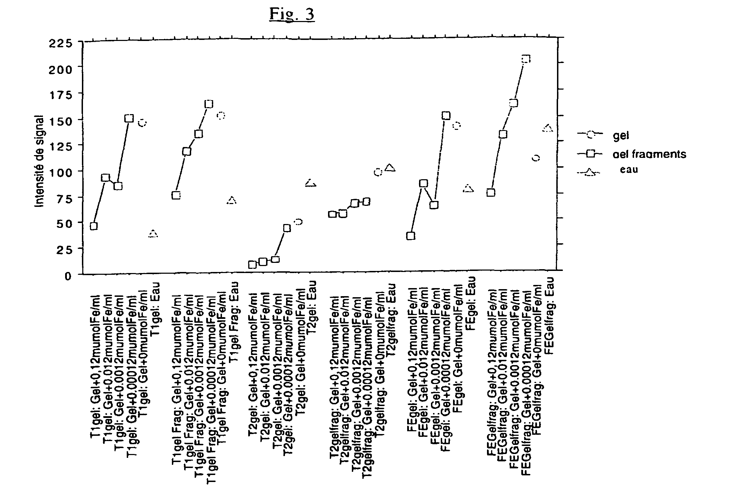

Résultats : les fragments de gel chargé présentent les mêmes caractéristiques que les gels de l'exemple 1, comme illustré figure 3. Le liquide surnageant a les mêmes caractéristiques que le sérum physiologique seul.

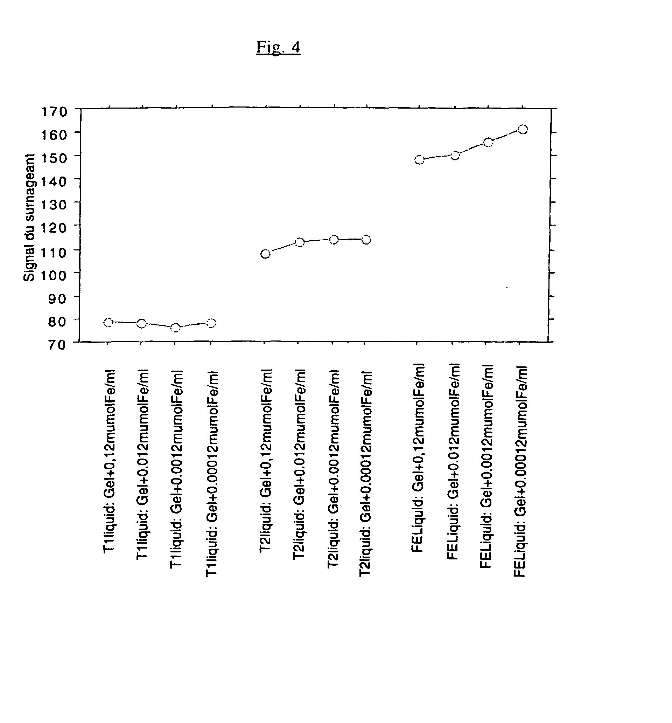

Il n'y a pas de variation du signal du liquide surnageant proportionnel à la quantité de marqueur présent dans les fragments de gel, indiquant l'absence de libération de marqueur, comme illustré figure 4.

### Exemple 3 : poudre sèche

On prépare un hydrogel comme dans l'exemple 2. On le fragmente au mixer et on le sèche par lyophilisation. On obtient une poudre constituée de particules chargées. On peut aussi sécher le bloc d'hydrogel et le fragmenter ensuite pour obtenir un résultat semblable.

### Exemple 4 : MS de phema chargées en poudre de tris+Dextran magnétite

Dans un réacteur en verre de 250ml équipé d'un agitateur on introduit 100 ml d'huile de paraffine et 1ml d'agent tensioactif non ionique (Span 80) et le mélange est chauffé à 60°C.

Par ailleurs on mélange 2,4ml de hydroxyethyl méthacrylate (Polysciences Europe, Eppelheim, Allemagne), 0,1ml de d'ethylene-glycol-dimethacrylate (Polysciences Europe, Eppelheim, Allemagne), 0,10mg d'azobisisobutyronitrile et 0,1g de poudre obtenue selon l'exemple 3. On disperse le mélange dans de l'huile de paraffine. On chauffe à 75°C sous agitation forte.

Après 30 minutes, l'agitation est arrêtée. Le mélange est refroidi et décanté. La phase huileuse est aspirée. Les billes sont filtrées puis lavées par une solution aqueuse détergente puis par de l'eau. Elles ont un contenu en eau de 40 % environ. Elles possèdent un diamètre compris entre 0,1 et 1mm. Elles ont en IRM la même signalétique que les gels chargés de l'exemple 2.

### Exemple 5 préparation de blocs et fragments de gélatine chargée en poudre de tris+Dextran magnétite

On prépare 5ml d'une solution à 4 % (poids/volume) de collagène humain soluble (Sigma, C7521) dans l'acide acétique à 5%. On ajoute 0,1g de poudre d'hydrogel chargé obtenue selon l'exemple 3. On réticule en ajoutant 1 ml de solutions aqueuse de Glutaraldéhyde (Sigma, G7526). On maintient le mélange à 30°C pendant 3 heures. On obtient une gélatine chargée, qui est ensuite fragmentée en blocs ou particules qui peuvent à leur tour être utilisées pour former une suspension visqueuse injectable.

### Exemple 6 : Solution gélifiante marquée avec la poudre

On prépare 10ml d'une solution à 10 % (p/v) de Phema (Polysciences Europe, Eppelheim, Allemagne) dans de l'éthanol. On ajoute 0,1g de poudre sèche de gel chargé obtenue selon l'exemple 3. On injecte plusieurs ml de cette solution par un cathéter dans le flux sanguin et gélifie par élimination de solvant et absorption d'eau. Le gel qui en résulte présente un signal du type des gels chargés de l'exemple 1.

## Revendications

1. Biomatériau constitué d'au moins un polymère hydrophile et chargé de particules d'oxyde de fer superparamagnétiques, **caractérisé en ce qu'**il se présente sous la forme d'un hydrogel de polymère hydrophile dans lequel sont réparties de manière homogène, sans agrégat, des particules d'oxydes de fer superparamagnétiques complexées avec un polymère hydrophile identique ou différent de celui de l'hydrogel.

2. Biomatériau selon l'une des revendications 1 ou 2, **caractérisé en ce que** l'hydrogel de polymère hydrophile comprend de l'ordre de 10⁻¹ % à 10⁻⁶ % en poids sec de particules d'oxyde de fer superparamagnétiques.

3. Biomatériau selon l'une quelconque des revendications 1 à 3, **caractérisé en ce que** le polymère hydrophile de l'hydrogel est choisi parmi :
- les polysaccharides sous leurs formes naturelles ou modifiées,
- les protéines sous leurs formes natives ou dénaturées et leurs dérivés, ainsi que les polypeptides et leurs dérivés,
- les polymères acryliques, leurs sels, esters, amides, anhydrides, nitriles et leurs copolymères,
- les polymères des acides polycarboxyliques, leurs sels, esters, amides, anhydrides, nitriles et leurs copolymères,
- le polyéthylène glycol ou le polyoxyéthylène, leurs dérivés et copolymères,
- la polyéthylènimine, ses dérivés et copolymères,
- le polystyrène sulfonate et le polystyrène phosphonate, leurs dérivés et copolymères ;
- le polyvinyle sulfonate et le polyvinyle phosphonate, leurs dérivés et copolymères ;
- le polyalcool vinylique, ses dérivés et copolymères,
- les polyvinyles pyridines, leurs sels, dérivés et copolymères,
- la polyvinyle pyrrolidone, ses dérivés et copolymères,
ou un mélange de deux au moins de ceux-ci.

4. Biomatériau selon l'une quelconque des revendications 1 à 4, **caractérisé en ce que** le polymère hydrophile complexant les particules d'oxyde de fer superparamagnétiques est choisi parmi :
- les polysaccharides sous leurs formes naturelles ou modifiées,
- les protéines sous leurs formes natives ou dénaturées et leurs dérivés, ainsi que les polypeptides et leurs dérivés,
- les polymères acryliques, leurs sels, esters, amides, anhydrides, nitriles et leurs copolymères,
- les polymères des acides polycarboxyliques, leurs sels, esters, amides, anhydrides, nitriles et leurs copolymères,
- le polyéthylène glycol ou le polyoxyéthylène, leurs dérivés et copolymères,
- la polyéthylènimine, ses dérivés et copolymères,
- le polystyrène sulfonate et le polystyrène phosphonate, leurs dérivés et copolymères
- le polyvinyle sulfonate et le polyvinyle phosphonate, leurs dérivés et copolymères,
- le polyalcool vinylique, ses dérivés et copolymères,
- les polyvinyles pyridines, leurs sels, dérivés et copolymères,
- la polyvinyle pyrrolidone, ses dérivés et copolymères,
ou un mélange de deux au moins de ceux-ci.

5. Un implant pour l'occlusion vasculaire, pour le comblement de cavités naturelles, pour le comblement de cavités artificielles ou pour le comblement de cavités chirurgicales, **caractérisé en ce qu'**il est constitué d'un biomatériau selon l'une quelconque des revendications 1 à 5.

6. Un biomatériau de reconstruction tissulaire, **caractérisé en ce qu'**il est constitué d'un biomatériau selon l'une quelconque des revendications 1 à 5.

7. Un biomatériau de recouvrement de surfaces corporelles, de cathéters, de sondes, de drains ou de prothèses, **caractérisé en ce qu'**il est constitué d'un biomatériau selon l'une quelconque des revendications 1 à 5.

8. Un marqueur-repère implantable ou non implantable, **caractérisé en ce qu'**il est constitué d'un biomatériau selon l'une quelconque des revendications 1 à 5.

9. Biomatériau selon l'une des revendications 1 à 9, **caractérisé en ce qu'**il se présente sous la forme choisie parmi :
- d'un bloc hydraté,
- de particules de gel hydraté,
- d'un bloc ou de particules de gel séché,
- d'un film sec ou humide,
- d'un filament,
- de poudres,
- d'une solution visqueuse injectable,
chaque forme pouvant être utilisée telle qu'elle ou associée à un autre biomatériau.

10. Procédé de préparation d'un biomatériau chargé de particules d'oxyde de fer superparamagnétiques de façon à présenter un signal différent de celui du matériau non chargé et de celui de l'environnement biologique dans lequel il est placé pour un ou plusieurs types de séquences d'IRM, ledit biomatériau étant constitué au moins d'un polymère hydrophile, **caractérisé en ce que** l'on mélange dans une solution aqueuse de monomères hydrophiles, des particules d'oxyde de fer superparamagnétiques complexées avec un polymère hydrophile constitué d'un monomère identique ou différent du premier, puis on polymérise l'ensemble de façon à obtenir un hydrogel de polymère dans lequel sont réparties de manière homogène, sans agrégat, les particules d'oxyde de fer superparamagnétiques complexées avec un polymère hydrophile.

11. Procédé selon la revendication 11, **caractérisé en ce que** le polymère hydrophile constituant le biomatériau est un polymère hydrosoluble et **en ce que** l'on réticule l'ensemble de façon à obtenir un hydrogel de polymère dans lequel sont réparties de manière homogène, sans agrégat, les particules d'oxyde de fer superparamagnétiques complexées avec un polymère hydrophile.

12. Procédé de préparation d'un biomatériau selon l'une des revendications 11 ou 12, **caractérisé en ce que** le rapport en poids de monomères hydrophiles ou de polymères hydrosolubles et de particules d'oxyde de fer superparamagnétiques complexées avec un polymère hydrophile ou hydrosoluble est compris entre 10⁻⁶ et 10⁻¹ %.

13. Procédé de préparation d'un biomatériau selon l'une des revendications 11 à 13, **caractérisé en ce que** l'hydrogel est ensuite transformé par lyophilisation ou par séchage.

14. Procédé de préparation d'un biomatériau selon l'une des revendications 11 à 14, **caractérisé en ce que** le polymère hydrophile constituant le biomatériau est choisi parmi :
- les polysaccharides sous leurs formes naturelles ou modifiées,
- les protéines sous leurs formes natives
ou dénaturées et leurs dérivés, ainsi que les polypeptides et leurs dérivés,
- les polymères acryliques, leurs sels, esters, amides, anhydrides, nitriles et leurs copolymères,
- les polymères des acides polycarboxyliques, leurs sels, esters, amides, anhydrides, nitriles et leurs copolymères,
- le polyéthylène glycol ou le polyoxyéthylène, leurs dérivés et copolymères ;
- la polyéthylènimine, ses dérivés et copolymères,
- le polystyrène sulfonate et le polystyrène phosphonate, leurs dérivés et copolymères,
- le polyvinyle sulfonate et le polyvinyle phosphonate, leurs dérivés et copolymères,
- le polyalcool vinylique, ses dérivés et copolymères,
- les polyvinyles pyridines, leurs sels, dérivés et copolymères,
- la polyvinyle pyrrolidone, ses dérivés et copolymères,
ou un mélange de deux au moins de ceux-ci et **en ce que** le polymère hydrophile complexant les particules d'oxyde de fer superparamagnétiques est choisi parmi :
- les polysaccharides sous leurs formes naturelles ou modifiées,
- les protéines sous leurs formes natives ou dénaturées et leurs dérivés, ainsi que les polypeptides et leurs dérivés,
- les polymères acryliques, leurs sels, esters, amides, anhydrides, nitriles et leurs copolymères,
- les polymères des acides polycarboxyliques, leurs sels, esters, amides, anhydrides, nitriles et leurs copolymères,
- le polyéthylène glycol ou le polyoxyde d'éthylène, leurs dérivés et copolymères,
- la polyéthylènimine, ses dérivés et copolymères,
- le polystyrène sulfonate et le polystyrène phosphonate, leurs dérivés et copolymères,
- le polyvinyle sulfonate et le polyvinyle phosphonate, leurs dérivés et copolymères ;
- le polyalcool vinylique, ses dérivés et copolymères,
- les polyvinyles pyridines, leurs sels, dérivés et copolymères,
- la polyvinyle pyrrolidone, ses dérivés et copolymères,
ou un mélange de deux au moins de ceux-ci.

## Patentansprüche

1. Biomaterial bestehend aus wenigstens einem hydrophilen Polymer und geladen mit superparamagnetischen Eisenoxydpartikeln, charakterisiert dadurch dass es sich präsentiert in der Form eines Hydrogels von hydrophilem Polymer worin auf homogene Weise verteilt sind, ohne Aggregat, superparamagnetische Eisenoxydpartikel komplexiert mit einem hydrophilen Polymer identisch oder verschieden von jenem des Hydrogels.

2. Biomaterial nach Anspruch 1, charakterisiert dadurch dass das Hydrogel von hydrophilem Polymer enthält in der Größenordnung von 10⁻¹ % bis 10⁻⁶ % in trockenem Gewicht superparamagnetische Eisenoxydpartikel.

3. Biomaterial nach einem der Ansprüche 1 oder 2, charakterisiert dadurch dass das hydrophile Polymer des Hydrogels ausgewählt ist aus:
- den Polysacchariden unter deren natürlichen oder modifizierten Form,
- den Proteinen unter deren natürlichen oder deren denaturierten Form und deren Derivat, sowie die Polypeptide und deren Derivate,
- den acrylischen Polymeren, deren Salze, Ester, Amide, Anhydride, Nitrile und deren Copolymere,
- den Polymeren der polycarboxylischen Säuren, deren Salze, Ester, Amide, Anhydride, Nitrile und deren Copolymere,
- dem Polyethylen Glycol oder dem Polyoxyethylen, deren Derivate und Copolymere,
- dem Polyethylenimin, seine Derivate und Copolymere,
- dem Polystyren Sulfonat und dem Polystyren Phosphonat, deren Derivate und Copolymere;
- dem Polyvinyl Sulfonat und dem Polyvinyl Phosphonat, deren Derivate und Copolymere;
- dem vinylischen Polyalkohol, seine Derivate und Copolymere,
- dem Polyvinyl Pyridin, seine Salze, Derivate und Copolymere,
- dem Polyvinil Pyrrolidon, seine Derivate und Copolymere,
oder eine Mischung von wenigstens zwei von diesen.

4. Biomaterial nach einem der Ansprüche 1 bis 3, charakterisiert dadurch dass das hydrophile Polymer komplexierend die superparamagnetischen Eisenoxydpartikel ausgewählt ist aus:
- den Polysacchariden unter ihrer natürlichen oder modifizierten Form,
- den Proteinen unter ihren natürlichen oder denaturierten Formen und ihre Derivate, sowie die Polypeptide und ihre Derivate,
- den acrylischen Polymeren, ihre Salze, Ester, Amide, Anhydride, Nitrile und deren Copolymere,
- den Polymeren der polycarboxylischen Säuren, deren Salze, Ester, Amide, Anhydride, Nitrile und ihre Copolymere.
- dem Polyethylen Glycol oder dem Polyoxyethylen, deren Derivate und Copolymere,
- dem Polyethylenimin, seine Derivate und Copolymere,
- dem Polystyren Sulfonat und dem Polystyren Phosphonat, deren Derivate und Copolymere,
- dem Polyvinyl Sulfonat und dem Polyvinyl Phosphonat, deren Derivate und Copolymere,
- dem vinylischen Polyalkohol, seine Derivate und Copolymere,
- den Polyvinyl Pyridinen, deren Salze, Derivate und Copolymere,
- dem Polyvinyl Pyrrolidon, seinen Derivaten und Copolymeren,
oder einer Mischung von wenigstens zwei von diesen.

5. Ein Implantat für die Gefässokklusion, für die Auffüllung der natürlichen Hohlräume, für die Auffüllung der künstlichen Hohlräume oder für die Auffüllung von chirurgischen Hohlräumen, charakterisiert dadurch dass es besteht aus einem Biomaterial nach einem der Ansprüche 1 bis 4.

6. Ein Biomaterial des Wiederaufbaus von Geweben, charakterisiert dadurch dass es besteht aus einem Biomaterial nach einem der Ansprüche 1 bis 4.

7. Ein Biomaterial des Überdeckens von Körperflächen, von Kathetern, von Sonden, von Kanülen oder von Prothesen, charakterisiert dadurch dass es besteht aus einem Biomaterial nach einem der Ansprüche 1 bis 4.

8. Ein Markierer implantierbar oder nicht implantierbar, charakterisiert dadurch dass er besteht aus einem Biomaterial nach einem der Ansprüche 1 bis 4.

9. Biomaterial nach einem der Ansprüche 1 bis 8, charakterisiert dadurch dass es sich präsentiert unter der Form ausgewählt aus:
- einem hydratierten Block,
- hydratierten Gelpartikeln,
- einem Block oder getrocknete Gelpartikel,
- ein trockener oder feuchter Film,
- ein Faden,
- Puder,
- eine einspritzbare visköse Lösung
jede Form kann gebraucht werden als solche oder komplementär zu einem anderen Biomaterial.

10. Verfahren des Vorbereitens eines Biomaterials geladen mit superparamagnetischen Eisenoxydpartikeln auf solche Weise dass es ein unterschiedliches Signal aufweist von dem des nicht geladenen Materials oder von dem der biologischen Umgebung worin es placiert ist für eine oder mehrere Sequenztypen der Kernspintomographie, besagtes Biomaterial bestehend aus wenigstens einem hydrophilen Polymer, charakterisiert dadurch dass man mischt in einer wässerigen Lösung von hydrophilen Monomeren, superparamagnetische Eisenoxydpartikel komplexiert mit einem hydrophilen Polymer bestehend aus einem identischen oder vom ersten verschiedenen Monomer, dann polymerisiert man das Ganze um ein Hydrogel von Polymer zu erreichen worin auf homogene Weise verteilt sind, ohne Aggregat, die superparamagnetischen Eisenoxydpartikel komplexiert mit einem hydrophilen Polymer.

11. Verfahren nach Anspruch 10, charakterisiert dadurch dass das das Biomaterial bildende hydrophile Polymer ein wasserlösliches Polymer ist und dadurch dass man das Ganze vernetzt so dass man ein Hydrogel von Polymer enthält worin auf homogene Weise verteilt sind, ohne Aggregat, die superparamagnetischen Eisenoxydpartikel komplexiert mit einem hydrophilen Polymer.

12. Verfahren des Vorbereitens eines Biomaterials nach einem der Ansprüche 10 oder 11, charakterisiert dadurch dass das Gewichtsverhältnis von hydrophilen Monomeren oder von wasserlöslichen Polymeren und von superparamagnetischen Eisenoxydpartikeln komplexiert mit einem hydrophilen oder wasserlöslichen Polymer zwischen 10⁻⁶ und 10⁻¹ % liegt.

13. Verfahren des Vorbereitens eines Biomaterials nach einem der Ansprüche 10 bis 12, charakterisiert dadurch dass das Hydrogel danach umgewandelt wird durch Lyophilisierung oder durch Trocknen.

14. Verfahren des Vorbereitens eines Biomaterials nach einem der Ansprüche 10 bis 13, charakterisiert dadurch dass das hydrophile Polymer bildend das Biomaterial ausgewählt ist aus:
- den Polysacchariden unter deren natürlichen oder modifizierten Form,
- den Proteinen unter deren natürlichen oder deren denaturierten Form und deren Derivat, sowie die Polypeptide und deren Derivate,
- den acrylischen Polymeren, deren Salze, Ester, Amide, Anhydride, Nitrile und deren Copolymere,
- den Polymeren der polycarboxylischen Säuren, deren Salze, Ester, Amide, Anhydride, Nitrile und deren Copolymere,
- dem Polyethylen Glycol oder dem Polyoxyethylen, deren Derivate und Copolymere,
- dem Polyethylenimin, seine Derivate und Copolymere,
- dem Polystyren Sulfonat und dem Polystyren Phosphonat, deren Derivate und Copolymere;
- dem Polyvinyl Sulfonat und dem Polyvinyl Phosphonat, deren Derivate und Copolymere;
- dem vinylischen Polyalkohol, seine Derivate und Copolymere,
- dem Polyvinyl Pyridin, seine Salze, Derivate und Copolymere,
- dem Polyvinil Pyrrolidon, seine Derivate und Copolymere,
oder eine Mischung von wenigstens zwei von diesen und dadurch dass das hydrophile Polymer komplexierend die superparamagnetischen Eisenoxydpartikel ausgewählt ist aus:
- den Polysacchariden unter deren natürlichen oder modifizierten Form,
- den Proteinen unter deren natürlichen oder deren denaturierten Form und deren Derivat, sowie die Polypeptide und deren Derivate,
- den acrylischen Polymere, deren Salze, Ester, Amide, Anhydride, Nitrile und deren Copolymere,
- den Polymeren der polycarboxylischen Säuren, deren Salze, Ester, Amide, Anhydride, Nitrile und deren Copolymere,
- dem Polyethylen Glycol oder dem Polyoxyethylen, deren Derivate und Copolymere,
- dem Polyethylenimin, seine Derivate und Copolymere,
- dem Polystyren Sulfonat und dem Polystyren Phosphonat, deren Derivaten und Copolymere;
- dem Polyvinyl Sulfonat und dem Polyvinyl Phosphonat, deren Derivate und Copolymere;
- dem vinylischen Polyalkohol, seine Derivate und Copolymere,
- dem Polyvinyl Pyridin, seine Salze, Derivate und Copolymere,
- dem Polyvinil Pyrrolidon, seine Derivate und Copolymere, oder eine Mischung von wenigstens zwei von diesen.

## Claims

1. Biomaterial comprising at least one hydrophilic polymer and filled with superparamagnetic iron oxide particles, **characterised in that** it is presented in the form of a hydrophilic polymer hydrogel in which superparamagnetic iron oxide particles are homogeneously distributed, without aggregation, complexed with a hydrophilic polymer identical to or different from that of the hydrogel.

2. Biomaterial according to claim 1, **characterised in that** the hydrophilic polymer hydrogel comprising the order of 10⁻¹ % to 10⁻⁶ % by dry weight of supermagnetic iron oxide particles.

3. Biomaterial according to any of one of claims 1 or 2,
**characterised in that** the hydrophilic polymer of the hydrogel is selected among:
- polysaccharides in their natural or modified forms,
- proteins in their native or denatured forms and their derivatives, as well as polypeptides and their derivatives,
- acrylic polymers, their salts, esters, amides, anhydrides, nitriles and their copolymers,
- polymers of polycarboxylic acids, their salts, esters, amides, anhydrides, nitriles and their copolymers,
- polyethylene glycol or polyoxyethylene, their derivatives and copolymers,
- polyethylenimine, its derivatives and copolymers,
- polystyrene sulfonate and polystyrene phosphonate, their derivatives and copolymers,
- polyvinyl sulfonate and polyvinyl phosphonate, their derivatives and copolymers,
- vinylic polyalcohol, its derivatives and copolymers,
- polyvinyl pyridines, their salts, derivatives and copolymers,
- polyvinyl pyrrolidone, its derivatives and copolymers,
or a mixture of at least two of these.

4. Biomaterial according to any one of claims 1 to 3, **characterised in that** the hydrophilic polymer complexing the superparamagnetic iron oxide particles is selected among:
- polysaccharides in their natural or modified forms,
- proteins in their native or denatured forms and their derivatives, as well as polypeptides and their derivatives,
- acrylic polymers, their salts, esters, amides, anhydrides, nitriles and their copolymers,
- polymers of polycarboxylic acids, their salts, esters, amides, ahydrides, nitriles and their copolymers,
- polyethylene glycol or polyoxyethylene, their derivatives and copolymers,
- polyethylenimine, its derivatives and copolymers,
- polystyrene sulfonate and polystyrene phosphonate, their derivatives and copolymers,
- polyvinyl sulfonate and polyvinyl phosphonate, their derivatives and copolymers,
- vinylic polyalcohol, its derivatives and copolymers,
- polyvinyl pyridines, their salts, derivatives and copolymers,
- polyvinyl pyrrolidone, its derivatives and copolymers,
or a mixture of at least two of these.

5. An implant for vascular occlusion, for the filling of natural cavities, for the filling of artificial cavities or for the filling of surgical cavities, **characterised in that** it comprises a biomaterial according to any one of claims 1 to 4.

6. A biomaterial for tissue reconstruction, **characterised in that** it comprises a biomaterial according to any one of claims 1 to 4.

7. A biomaterial for the covering of bodily surfaces, catheters, probes, drains or prostheses, **characterised in that** it comprises a biomaterial according to any one of claims 1 to 4.

8. An implantable or non-implantable marker-calibration marker, **characterised in that** it comprises a biomaterial according to any one of claims 1 to 4.

9. Biomaterial according to any one of claims 1 to 8, **characterised in that** it is presented in a form chosen from among:
- a hydrated compound unit,
- hydrated gel particles,
- a compound unit or particles of dried gel,
- a dry or moist film,
- a filament,
- powders,
- an injectable viscous solution,
each form being capable of being used as such or combined with another biomaterial.

10. Method for preparation of a biomaterial filled with superparamagnetic iron oxide particles so as to present a signal different from that of unfilled material and from that of the biological environment in which it is placed for one or more types of MRI sequences, said biomaterial comprising at least one hydrophilic polymer, **characterised in that** superparamagnetic iron oxide particles complexed with a hydrophilic polymer made up of a monomer identical to or different from the first are mixed in an aqueous solution of hydrophilic monomers, and then the whole is polymerised so as to obtain a polymer hydrogel in which superparamagnetic iron oxide particles complexed with a hydrophilic polymer are homogeneously distributed, without aggregation.

11. Method according to claim 10, **characterised in that** the hydrophilic polymer making up the biomaterial is a water-soluble polymer and **in that** the whole is crosslinked so as to obtain a polymer hydrogel in which the superparamagnetic iron oxide particles complexed with a hydrophilic polymer are homogenously distributed, without aggregation.

12. Method for preparation of a biomaterial according to any one of claims 10 or 11, **characterised in that** the weight ratio of hydrophilic monomers or water-soluble polymers to superparamagnetic iron oxide particles complexed with a hydrophilic or water-soluble polymer is between 10⁻⁶ and 10⁻¹ %.

13. Method for preparation of a biomaterial according to any one of claims 10 to 12, **characterised in that** the hydrogel is then processed by lyophilisation or drying.

14. Method for preparation of a biomaterial according to any one of claims 10 to 13, **characterised in that** the hydrophilic polymer making up the biomaterial is selected among:
- polysaccharides in their natural or modified forms,
- proteins in their native or denatured forms and their derivatives, as well as polypeptides and their derivatives,
- arcylic polymers, their salts, esters, amides, ahydrides, nitriles and their copolymers,
- polymers of polycarboxylic acids, their salts, esters, amides, anhydrides, nitriles and their copolymers,
- polyethylene glycol or polyoxyethylene, their derivatives and copolymers,
- polyethylenimine, its derivatives and copolymers,
- polystyrene sulfonate and polystyrene phosphonate, their derivatives and copolymers,
- polyvinyl sulfonate and polyvinyl phosphonate, their derivatives and copolymers,
- vinylic polyalcohol, its derivatives and copolymers,
- polyvinyl pyridines, their salts, derivatives and copolymers,
- polyvinyl pyrrolidone, its derivatives and copolymers,
or a mixture of at least two of these and **in that** the hydrophilic polymer complexing the superparamagnetic iron oxide particles is chosen from among:
- polysaccharides in their natural or modified forms,
- proteins in their native or denatured forms and their derivatives, as well as polypeptides and their derivatives,
- acrylic polymers, their salts, esters, amides, ahydrides, nitriles and their copolymers,
- polymers of polycarboxylic acids, their salts, esters, amides, anhydrides, nitriles and their copolymers,
- polyethylene glycol or ethylene polyoxide, their derivatives and copolymers,
- polyethylenimine, its derivatives and copolymers,
- polystyrene sulfonate and polystyrene phosphonate, their derivatives and copolymers,
- polyvinyl sulfonate and polyvinyl phosphonate, their derivatives and copolymers,
- vinylic polyalcohol, its derivatives and copolymers,
- polyvinyl pyridines, their salts, derivatives and copolymers,
- polyvinyl pyrrolidone, its derivatives and copolymers,
or a mixture of at least two of these.
